# EUROPÄISCHE PATENTSCHRIFT

(11) **EP 0 750 965 B1**
(45) Veröffentlichungstag und Bekanntmachung des Hinweises auf die Patenterteilung: **02.11.2000**
(21) Anmeldenummer: 96110379.3
(22) Anmeldetag: 27.06.1996
(51) Int. Cl.: B23Q 3/08

(54) **Paletten-Spannvorrichtung**
Pallet clamping device
Dispositif de serrage pour palettes

(30) Priorität: 29.06.1995 DE 19525101
(43) Veröffentlichungstag der Anmeldung: 02.01.1997
(73) Patentinhaber: HOHENSTEIN Vorrichtungsbau und Spannsysteme GmbH, 09337 Hohenstein-Ernstthal (DE)
(72) Erfinder: Franzki, Michael, 78166 Donaueschingen (DE)
(74) Vertreter: Grosse, Ulrich

(56) Entgegenhaltungen:
- DE-A- 4 121 141
- DE-C- 3 733 708

## Beschreibung

Die Erfindung geht vom Oberbegriff der im Patentanspruch 1 definierten Art von Paletten-Spannvorrichtungen aus, die im wesentlichen aus Aufspannkörpern bestehen, an dessen Spannflächen mittels Spann- und Justierbaugruppen die spanend zu fertigenden Werkstücke lagegenau gespannt sind. Der Aufspannkörper ist auf einer der Maschinenpaletten eines Bearbeitungszentrums für spanende Fertigung fest angeordnet.

Die Erfindung betrifft eine Spannvorrichtung an der gleichzeitig mindestens zwei Werkstücke durch Drucköl mittels hydraulisch betätigter Spanngruppen gespannt und entspannt werden können. Für die Betätigung dieser Spanngruppen sind Drucköl-Zuführleitungen und -Rückführleitungen vorzusehen, um das Drucköl von einem extern angeordneten Spanndruck-Erzeuger über Kupplungen zuzuführen und entsprechend abzuleiten. Die werkstückabhängige flexible Anordnung der Spannbaugruppen am Aufspannkörper hat eine optimierte Nutzung des Spannraumes bzw. der Spannflächen für die Werkstückspannung zu ermöglichen. Der Spannraum ist deshalb auch freibleibend von Druckölleitungen und Rückführleitungen zu gestalten.

Stand der Technik ist es, in die horizontal liegenden Körper der Grundplatten von Spannvorrich-tungen bzw. in die Spannpaletten die Druckölleitungen und die Rückführleitungen zu integrieren und an der Oberfläche oder an der horizontalen Spannfläche entsprechend Aus- und Eintrittsöffnungen vorzusehen, die unmittelbar mit den Funktionselementen der Spannbaugruppen über Kupplungen verbunden sind.

Beispielsweise ist aus der DE-OS 4108545 eine Hydraulik-Spannpalette bekannt, bei der in einem Hohlraum des Palettenkörpers alle Drucköl-Zuführleitungen und Rückführleitungen, neben Steuer- und Verteileinrichtungen, aufgenommen sind. Über stimseitig aus der Hydraulik-Spannpalette austretende Rohrleitungen wird eine Verbindung mit den Spannbaugruppen, die werkstückabhängig auf der Oberfläche der Hydraulik-Spannpalette positioniert sind, realisiert und Drucköl zugeführt bzw. abgeleitet.

Aus der DE-OS 4121141 A 1 ist eine Spannvorrichtung bekannt, wobei auf der horizontal liegenden Spannpalette ein Raster von buchsenförmigen Ausnehmungen angeordnet ist, in die nach Bedarf ein Sortiment von Spann- und Justierbaugruppen, durch Verschraubung Formpaarungen mit der Spannpalette bildend, angeordnet ist. Für die Betätigung mit Drucköl ist die Spannpalette mit einem Raster von Versorgungs- und Rückführleitungen ausgestattet, um die buchsenförmigen Ausnehmungen untereinander und über Kupplungen mit einem externen Spanndruckerzeuger verbinden zu können.

Bekannt sind aus dem DE-GM 9407532 auch horizontale Spannpaletten, die aus einem Polymerbeton- bzw. Mineralgußkörper bestehen und von einem blechartigen Metallprofilmantel umschlossen sind. In diese Spannpaletten sind Rohrieitungssysteme, wobei Rohre, Verteiler und Anschlußelemente, komplettiert horizontal liegend, in den Polymerbeton bzw. Mineralguß eingegossen wurden, integriert.

Eine spannraumoptimierende Integration von Druckölleitungen und Rückführleitungen als Bohrungen in die vertikale Wände von Spannkörpern, die spannturmartig bzw. doppelwinkelförmig ausgebildet und mit vertikalen Spannflächen ausgestattet sind, wurde bisher nicht vorgeschlagen. Ein doppelwinkelförmiger Aufspannkörper, aus Polymerbeton bzw. Mineralguß geformt, ist in EP 0209 100 patentiert. Er ist in einer Anwendung als Fixiervorrichtung zum Ausrichten und Halten von Spannplatten oder von Werkstücken während einer Metallbearbeitung mit Handspannung patentiert. Bei Anwendung von hydraulisch betätigten Spannbaugruppen wären, im Patent nicht erwähnte, außerhalb des Aufspannkörpers, entlang der vertikalen Spannflächen oder der vertikalen seitlichen Stirnflächen verlaufende, Rohrleitungen anzubringen.

Der im Patentanspruch 1 angegebenen Erfindung liegt die Aufgabe zugrunde, die Ausbildung einer gewichtsreduzierten Paletten-Spannvorrichtung zu optimieren, indem an allen Spannflächen mit Drucköl betätigte Spann- und Justierbaugruppen, abhängig von der jeweiligen Werkstückform und - dimensionierung flexibel lagevorbestimmt anordenbar und der Spannraum bzw. die Spannflächen freibleibend von Druckölversorgungsleitungen und Rückführleitungen gestaltet sind.
Durch die im Patentanspruch 1 angegebenen Merkmale wird diese Aufgabe gelöst. Vorteilhaft für die Anwendung der Paletten-Spannvorrichtung sind insbesondere:
- eine in der Körpermitte des Aufspannkörpers integrierte Anordnung der Rohrleitungen für die Bereitstellung des Öldruckes für die Spannung an allen vertikalen Spannflächen und an der oberen Stirnfläche, über Kupplungen und Verschlußventile,
- mehrere sich über alle Spannflächen erstreckende Raster von flächigen Ausnehmungen für die wahlweise und damit flexible sowie drucksichere Anordnung der Spann- und Justierbaugruppen am Mineralguß-Aufspannkörper befestigt und verankert, und die unmittelbare Zuordnung der Rohrleitungen.

Weitergehende Ausgestaltungen der Erfindung sind in den Patentansprüchen 2 bis 4 angegeben. diese weitergehenden Ausgestaltungen ergänzen die dargestellte erfinderische Lösung bezüglich
- einer optimierten Form der Außenkontur der Grundkörper von Spann- und Justierbaugruppen in den Ausnehmungen von vertikalen Aufspannflächen, seitlichen Stirnflächen und an der oberen Stirnfläche der Aufspannkörper
- einer Anordnung von Stahl-Bundbuchsen für die Befestigung des Mineralguß-Aufspannkörpers und
- der Ausbildung von Rohrleitungen im Mineralguß-Aufspannkörper ohne Rohrummantelungen.

Ein Ausführungsbeispiel der Erfindung und deren weitere Ausgestaltung ist in den Figuren vereinfacht dargestellt und wird im Folgenden näher erläutert:
- Fig. 1: eine Vorderansicht einer Paletten-Spannvorrichtung, mit Spann- und Justierbaugruppen ausgestattet, als Teil-Schnittdarstellung
- Fig. 2: eine Seitenansicht eines Mineralguß-Aufspannkörpers der Paletten-Spannvorrichtung nach Fig. 1

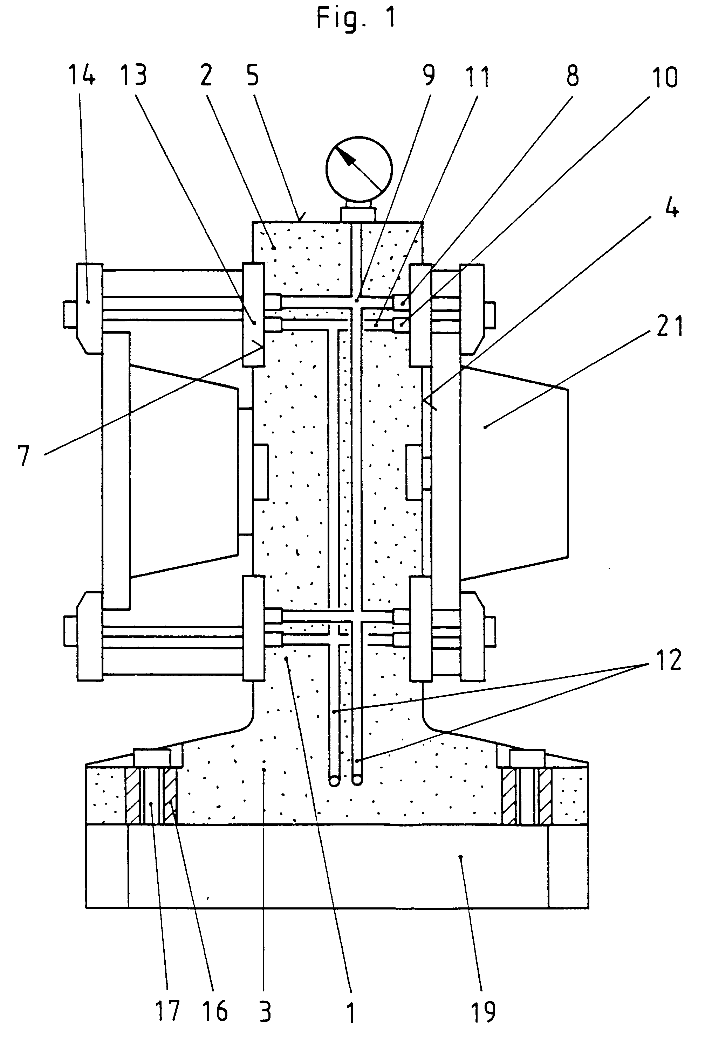

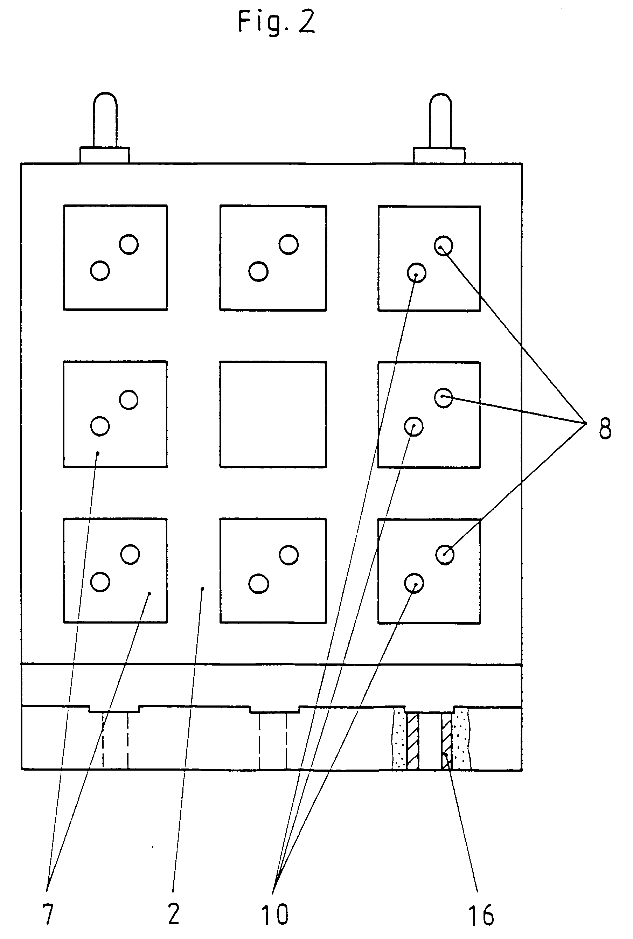

Die Paletten-Spannvorrichtung nach Fig. 1 und 2 besteht im Wensentlichen aus dem doppelwinkelförmigen Aufspannkörper 1, der aus der vertikalen Mittenwand 2, mit den parallelen vertikalen Aufspannflächen 4 und seitlichen Stirnflächen 6 ausgestattet, und der horizontalten Basisplatte 3 gebildet ist. Der Aufspannkörper 1 ist aus Mineralguß geformt.

Nach Fig. 1 ist die Paletten-Spannvorrichtung für die Spannung von zwei Stück gehäuseförmigen Werkstücken 21 mit je zwei Spannbaugruppen 14 für zwei unterschiedliche Spannhöhen ausgestattet. Die Werkstücke 21 sind mittels zwei Justierbaugruppen 14 in gleicher Mittenlage auf den vertikalen Aufspannflächen 4 beidseitig der Mittenwand 2 justiert. Die Spannbaugruppen 14, mit Öldruckzylindern ausgestattet, sind mit ihrem Grundkörper 13 in kreisförmigen Ausnehmungen 7 der Mittenwand 2 befestigt und verankert.

An jeder der vertieften Flächen 7 sind je eine Austrittsöffnung 8 einer Druckölversorgungsleitung 9 und eine Eintrittsöffnung 10 einer Rückführleitung 11 angeordnet. Deren, mit Verschlußventilen ausgestatteten, Kupplungshälften bilden mit den an den Grundkörper 13 der Spannbaugruppen 14 entsprechend angeordneten und ausgebildeten Kupplungshälften jeweils Schlauchkupplungen. Die Druckölversorgungsleitungen 9 und die Rückführleitungen 11 sind Verzweigungen der parallelen vertikal in der Mitte der Mittenwand verlaufenden Rohrleitungen 12, die in der Basisplatte 3 horizontal verlaufend angeordnet sind. Die Rohrleitungen 12 sind außerhalb des Aufspannkörpers 1 mit einem nicht dargestellten Spanndruck-Erzeuger über Kupplungen lösbar verbunden.

Der Mineralguß-Aufspannkörper 1 ist am Basisteil 3 mit sechs in paralleler Reihe zueinander angeordneter Befestigungsschrauben 17, die in Stahl-Bundbuchsen 16 aufgenommen sind, auf der Maschinenpalette 19 verankert.

Nach Fig. 2 sind die Aufspannflächen 4 des Aufspannkörpers 1 der Paletten-Spannvorrichtung mit einem flächendeckenden Raster von, mit rechteckiger Außenkontur ausgebildeten flächigen Ausnehmungen 7 versehen, in dessen vertieften Flächen entsprechend geformte Grundkörper 13 von Spann- und Justierbaugruppen 14 aufnehmbar und verankerbar sind. Die Ausnehmungen 7 sind mit je einer Austrittsöffnung 8 der Druckölversorgungsleitung 9 und einer Eintrittsöffnung 10 der Rückführleitung 11 für die Realisierung von Drucköl-Spannungen an den Spannbaugruppen 14 ausgebildet.

## Patentansprüche

1. Paletten-Spannvorrichtung für hydraulisch betätigte Werkstückspannung mit einem doppelwinkelförmigen Aufspannkörper, bestehend aus einer horizontalen Basisplatte (3) und einer vertikalen Mittenwand (2), wobei auf deren Aufspannflächen (4) in einem Raster von Ausnehmungen (7) Spann- und Justierbaugruppen (14), aus Stahl ausgebildet, um ihre Außenkontur eine Formpaarung mit der Mittenwand bildend, aufgenommen sind, die über Rohrleitungen für Druckölversorgung und Druckölrückführung mit einem außerhalb des Aufspannkörpers angeordneten Spanndruckerzeuger verbunden sind,
wobei in dem Raster von Ausnehmungen oder vertieften Flächen (7) an den vertikalen Aufspannflächen (4) der Mittenwand (2) die Grundkörper (13) von Spann- und Justierbaugruppen (14) aufgenommen, mittels Verklebung befestigt oder stoffschlüssig verankert, mit der Mittenwand (2) verbunden sind,
wobei die Ausnehmungen (7) an den vertikalen Aufspannflächen (4), an der oberen Stirnfläche (5) und an den seitlichen Stirnflächen (6) der Mittenwand (2) und an den Spann- und Justierbaugruppen (14) mindestens je eine Austrittsöffnung (8) einer Druckölversorgungsleitung (9) und je eine Eintrittsöffnung (10) einer Rückführleitung (11), jeweils als Kupplungshälften von Schlauchkupplungen mit Verschlußventil ausgebildet,
und in der Mittenwand (2) als parallele, vertikal und horizontal verlaufende Rohrleitungen (12) und in der Basisplatte (3) horizontal gerichtet, verlaufende Rohrleitungen (12) angeordnet sind,
und wobei die Austritts- und Eintrittsöffnungen (8 und 10) der Druckölversorgungsleitungen (9) und Rückführleitungen (11) in den Grundkörpern (13) der Spann- und Justierbaugruppen (14) und in der Mittenwand (2), einander achsgleich direkt zugeordnet, durch Verkuppelung miteinander verbunden sind.

2. Paletten-Spannvorrichtung nach Anspruch 1,
gekennzeichnet dadurch,
daß die Außenkontur der Grundkörper (13) vorzugsweise kreisförmig oder rechteckig ausgebildet ist.

3. Paletten-Spannvorrichtung nach Anspruch 1,
gekennzeichnet dadurch,
daß in der Basisplatte (3) des Mineralguß-Aufspannkörpers (1), beidseitig der Mittenwand (2) in paralleler Reihe zu dieser angeordnete, Stahl-Bundbuchsen (16) in Haftpaarung aufgenommen sind, über die der Mineralguß-Aufspannkörper (1) mittels Befestigungsschrauben (17) auf einer Maschinenpalette (19) verankerbar ist.

4. Paletten-Spannvorrichtung nach anspruch 1,
gekennzeichnet dadurch,
daß die in der Mittenwand (2) und in der Basisplatte (3) des Mineralguß-Aufspannkörpers (1) verlaufenden Hauptstränge der Rohrleitungen (12) druckabhängig ohne Rohrummantelungen eingebettet sind.

## Claims

1. Pallet clamping device for hydraulically operated component clamping with a double angle shaped mounting body, consisting of a horizontal base plate (3) and a vertical centre wall (2), on the mounting surfaces (4) of which are received steel designed clamping and adjusting assemblies (14) in a grid pattern of recesses (7), said assemblies building a form-fit around their external contour with the centre wall and being connected to a clamping pressure generator arranged outside the mounting body, via rigid lines for pressure oil supply and pressure oil return,
where in the grid pattern of recesses or recessed surfaces (7) on the vertical mounting surfaces (4) of centre wall (2) are received the base bodies (13) of clamping and adjusting assemblies (14), fastened by means of glue or anchored by material closure to centre wall (2),
where the recesses (7) provided on vertical mounting surfaces (4), on the upper front face (5) and on the lateral front faces (6) of centre wall (2) and at the clamping and adjusting assemblies (14) are equipped each at least with one outlet opening (8) of a pressure oil supply conduit (9) and one inlet opening (10) of a return conduit (11), designed each as coupler halves of hose couplings with ball valve,
and arranged in centre wall (2) as parallel rigid lines (12) running in vertical and horizontal direction and in base plate (3) as rigid lines (12) running in horizontal direction,
and where outlet and inlet openings (8 and 10) of pressure oil supply conduits (9) and return conduits (11) in the base bodies (13) of clamping and adjusting assemblies (14) and in the centre wall (2), coordinated directly each to the other in the same axis, are linked together by means of couplers.

2. Pallet clamping device as per patent claim 1,
characterised in
that the external contour of base bodies (13) is preferably of circular or rectangular shape.

3. Pallet clamping device as per patent claim 1,
characterised in
that in base plate (3) of reaction resin concrete mounting body (1) there are held by adhesive closure steel flange sleeves (16) on both sides of centre wall (2) and ranged parallel to it, by means of which reaction resin concrete mounting body (1) may be anchored to a machine pallet (19) with fastening screws (17).

4. Pallet clamping device as per patent claim 1,
characterised in
that main branches of rigid lines (12) running in centre wall (2) and in base plate (3) of reaction resin concrete mounting body (1) are embedded, depending on pressure, without tube coating.

## Revendications

1. Dispositif de serrage pour palettes pour un serrage de pièces à action hydraulique avec un corps de montage en forme d'équerre double, étant composé d'une plaque de base horizontale (3) et d'une paroi centrale verticale (2), sur les surfaces de bridage de laquelle (4) sont reçus dans une grille d'évidements (7) des ensembles de serrage et d'ajustage (14) faits en acier, lesdits ensembles formant un appariement de forme avec la paroi centrale autour de leur contour extérieur et étant réunis avec un générateur de pression de serrage disposé à l'extérieur du corps de montage, par l'intermédiaire de conduites rigides pour l'alimentation et le retour de l'huile sous pression,
dans lequel les corps de base (13) des ensembles de serrage et d'ajustage (14) sont reçus dans la grille d'évidements ou dans les surfaces évidées (7) sur les surfaces de bridage verticales (4) de la paroi centrale (2), fixés au moyen d'une colle ou ancrés par union de matériaux avec la paroi centrale (2),
dans lequel les évidements (7) sur les surfaces de bridage verticales (4), sur la face frontale supérieure (5) et aux faces frontales latérales (6) de la paroi centrale (2) et sur les ensembles de serrage et d'ajustage (14) disposent chacun au moins d'une ouverture de sortie (8) pour une conduite d'alimentation en huile sous pression (9) et d'une ouverture d'entrée (10) pour une conduite de retour (11), étant formées chacune en tant que moitié de coupleur de raccords-accouplements pour tuyaux flexibles avec valve à bille,
et dans lequel la paroi centrale (2) dispose de conduites rigides (12) parallèles posées verticale et horizontalement et la plaque de base (3) dispose de conduites rigides (12) posées horizontalement,
et où les ouvertures d'entrée et de sortie (8 et 10) des conduites d'alimentation en huile sous pression (9) et de retour (11) sont réunies l'une avec l'autre, affectées directement l'une à l'autre sur le même axe, par accouplement dans les corps de base (13) des ensembles de serrage et d'ajustage (14) et dans la paroi centrale (2).

2. Dispositif de serrage pour palettes suivant revendication 1,
caractérisé par le fait que
le contour extérieur des corps de base (13) est formé de préférence en forme circulaire ou rectangulaire.

3. Dispositif de serrage pour palettes suivant revendication 1,
caractérisé par le fait que
dans la plaque de base (3) du corps de montage en béton à résine (1), sur les deux côtés de la paroi centrale (2) et arrangées en rangée parallèle par rapport à celle-ci, sont reçues des douilles à collet en acier (16), en appariement par adhérence, moyennant desquelles le corps de montage en béton à résine (1) peut être ancré sur une palette machine (19) par l'intermédiaire de vis de fixation (17).

4. Dispositif de serrage pour palettes suivant revendication 1,
caractérisé par le fait que
les rames principales des conduites rigides posées dans la paroi centrale (2) et dans la plaque de base (3) du corps de montage en béton à résine (1) sont enrobées, en fonction de la pression, sans gaines pour tubes.
